# EUROPÄISCHE PATENTSCHRIFT

(11) **EP 2 504 651 B1**
(45) Veröffentlichungstag und Bekanntmachung des Hinweises auf die Patenterteilung: **10.09.2014**
(21) Anmeldenummer: 10781714.0
(22) Anmeldetag: 25.11.2010
(51) Int. Cl.: F28D 7/16, F28F 9/00, F28D 7/00, F28F 9/02

(54) **SAUGROHR MIT INTEGRIERTEM LADELUFTKÜHLER**
INTAKE MANIFOLD HAVING AN INTEGRATED CHARGE AIR COOLER
TUYAU ASPIRANT AVEC REFROIDISSEUR INTÉGRÉ D'AIR DE SURALIMENTATION

(30) Priorität: 26.11.2009 DE 102009055715
(43) Veröffentlichungstag der Anmeldung: 03.10.2012
(73) Patentinhaber: Behr GmbH & Co. KG, 70469 Stuttgart (DE)
(72) Erfinder: NGUYEN, Chi-Duc, 70619 Stuttgart (DE)
(74) Vertreter: Grauel, Andreas
(86) Internationale Anmeldenummer: PCT/EP2010/068227
(87) Internationale Veröffentlichungsnummer: WO 2011/064301

(56) Entgegenhaltungen:
- EP-A2- 0 578 916
- WO-A2-02/18758
- DE-A1-102007 030 464
- FR-A1- 2 645 209
- FR-A1- 2 908 832

## Beschreibung

Die Erfindung betrifft ein Saugrohr mit integriertem Ladeluftkühler nach dem Oberbegriff des Anspruchs 1. DE 10 2007 030464 beschreibt ein derartiges Saugrohr.

Aus der Praxis des Kraftfahrzeugbaus sind Vorschläge bekannt, Ladeluftkühler in ein Saugrohr eines Verbrennungsmotors zu integrieren, wobei die Ladeluftkühler indirekt, das heißt kühlmitteldurchströmt, gekühlt werden. Dabei ist es üblich, den Ladeluftkühler mit einer Flanschplatte zu versehen, so dass er nach Art eines Einschubs in eine Öffnung eines Saugrohrgehäuses einsetzbar und mit einem Rand der Flanschplatte Gehäuse verschraubt oder verschweiß wird. Bei einer solchen Bauform werden Vibrationen oder thermisch bedingte Verspannungen über die Flanschplatte unmittelbar auf den Ladeluftkühler geleitet.

Es ist die Aufgabe der Erfindung, ein Saugrohr mit integriertem Ladeluftkühler anzugeben, bei dem der Ladeluftkühler besonders gut gegen Vibrationen und Verspannungen geschützt ist.

Diese Aufgabe wird für ein eingangs genanntes Saugrohr erfindungsgemäß durch die kennzeichnenden Merkmale des Anspruchs 1 gelöst. Dadurch, dass der Ladeluftkühler im Wesentlichen vollständig von dem Gehäuse umfangen ist, kann er ausreichend gedämpft in dem Gehäuse aufgenommen sein. Die notwendigen Durchführungen für das Kühlfluid haben eine relativ kleine Querschnittsfläche und können über geeignete Maßnahmen so gegen das Gehäuse abgedichtet sein, dass keine erheblichen Kräfte durch Vibrationen oder thermische Verspannungen auf den Ladeluftkühler übertragen werden. Erfindungsgemäß ist der Ladeluftkühler elastisch gegenüber dem Gehäuse abgestützt. Hierdurch werden Vibrationen, die zunächst von dem Verbrennungsmotor auf das Gehäuse übertragen werden, gegenüber dem Ladeluftkühler gedämpft bzw. der Ladeluftkühler und das Saugrohrgehäuse sind entkoppelt. Erfindungsgemäß erfolgt die Abstützung mittels zumindest eines elastischen Lagerglieds, das in bevorzugter, aber nicht notwendiger Detailgestaltung an einem Sammler des Ladeluftkühlers angeordnet ist. Das Lagerglied kann zum Beispiel, aber nicht notwendig als Block aus einem elastischen Material wie Gummi o.ä. gebildet sein. Eine Festlegung an dem Sammler kann zum Beispiel durch Verklemmung erfolgen, etwa mittels einer biegsamen Lasche des Sammlers. Die Anordnung des Lagerglieds an dem Sammler hat insbesondere den Vorteil, dass die Lagerkräfte auf mechanisch eher unempfindliche Strukturen einwirken.

Allgemein wird unter Ladeluft im Sinne der Erfindung das dem Verbrennungsmotor zugeführte Gas verstanden und beinhaltet in diesem Sinne auch beliebige Mischungen von Luft und Abgas, sofern eine Abgasrückführung vorgesehen ist. Das erfindungsgemäße Saugrohr kann sowohl mit Dieselmotoren als auch mit Benzinmotoren kombiniert werden.

Bei einer bevorzugten Ausführungsform der Erfindung hat der Ladeluftkühler im Wesentlichen die Form eines Quaders, wobei der Ladeluftkühler senkrecht zu der größten Seitenfläche des Quaders in eines der Gehäuseteile einsetzbar ist. Hierdurch ist die Montage des Saugrohrs vereinfacht. In bevorzugter aber nicht notwendiger Detailgestaltung erfolgt dabei das Einsetzen des Ladeluftkühlers von oben.

Allgemein vorteilhaft ist der Ladeluftkühler eines erfindungsgemäßert Saugrohrs als Rohrbündelkühler mit einem Stapel von Flachrohren ausgebildet, wobei die Flachrohre von dem Kühlfluid durchströmt und von der Ladeluft umströmt sind. Eine solche Bauform bietet eine hohe Kühlleistung bei geringem Gewicht und kleinem Bauraum. In bevorzugter Detailgestaltung ist dabei endseitig der Flachrohre jeweils ein Sammler angeordnet, wobei die Flachrohre und die Sammler als verlöteter Block aus Metall, bevorzugt Aluminium, hergestellt sind. Neben der einfachen und kostengünstigen Herstellung fallen bei einer solchen Bauform keine Dichtungen zwischen dem Kühlfluidbereich und dem Ladeluftbereich an, so dass die Gefahr eines Wasserschlags verringert ist. In weiter bevorzugter Detailgestaltung hat zumindest einer der Sammler einen Bodenbereich und eine Sammlerwand, die zusammen aus einem Blechformteil einstückig ausgebildet sind. Hierdurch werden zum einen die Herstellungskosten verringert und zum anderen die Anzahl der Lötstellen, so dass besonders wenig Ausschuss entsteht. Zum Beispiel ist es möglich, einen Sammler aus nur drei Teilen, nämlich dem Blechformteil und zwei Deckelteilen, in anderer Ausführung auch aus fünf Teilen, nämlich dem Blechformteil und insgesamt vier Deckelteilen, auszubilden.

Bei einer weiteren bevorzugten Detailgestaltung umfasst das Rohrbündel wenigstens zwei Rohrreihen in einer Tiefenrichtung, so dass mehrere Strömungswege für das Kühlfluid zur Verfügung stehen und die Wärmetauscherleistung bei gegebenem Bauraum optimiert werden kann. Die Rohrreihen können bei einer bevorzugten Ausführungsform aus separaten Flachrohren bestehen und bei einer alternativen bevorzugten Ausführungsform aus einem einstückigen Flachrohr mit getrennten Strömungskanälen. Ein solches einstückiges Flachrohr kann beispielsweise als extrudiertes Formteil hergestellt sein. Weiterhin bevorzugt werden die Rohrreihen von dem Kühlfluid nacheinander in entgegengesetzter Richtung durchströmt, insbesondere in Gegenstromanordnung bezüglich der Strömungsrichtung der Ladeluft. Dies optimiert die Tauscherleistung bei gegebenem Bauraum. Zudem können zum Beispiel im Fall eines zweireihigen Wärmetauschers mit einem endseitigen Umlenkbereich beide Kühlfluid-Anschlüsse an dem gleichen Sammler vorgesehen werden.

Bei einer möglichen Ausführungsform der Erfindung ist an dem Ladeluftkühler zumindest ein Seitenteil angeordnet, wobei das Seitenteil eine Strukturierung zur Ausbildung einer Labyrinthdichtung gegenüber einer Innenwand des Gehäuses aufweist. Hierdurch wird auf einfache Weise ein Leckstrom der Ladeluft zwischen Ladeluftkühler und Gehäusewand unterbunden. Eine Labyrinthdichtung ist auch dann effektiv, wenn die Gehäusewand aufgrund von Temperaturschwankungen Ausbauchungen oder ähnliche Deformationen ausbildet. Optional kann zusätzlich zu der Labyrinthdichtung eine Elastomerdichtung vorgesehen sein.

Bei weiter bevorzugter Detailgestaltung sind zumindest zwei Lagerglieder über ein Verbindungsglied miteinander verbunden. Dies erleichtert die Montage und sichert eigenständig oder ergänzend eine Halterung der Lagerglieder an dem Ladeluftkühler. Bei einer bevorzugten Detailgestaltung weist das Verbindungsglied ein Dichtglied zur Abdichtung des Ladeluftkühlers gegenüber dem Gehäuse auf, so dass zugleich eine Abdichtung, etwa gegen Leckströme der Ladeluft um den Ladeluftkühler herum, erfolgen kann.

Allgemein vorteilhaft weist ein Sammler des Ladeluftkühlers einen in Strömungsrichtung der Ladeluft erstreckten Überstand über eine Eintritts- oder Austrittsebene eines Kühlernetzes auf. Durch diese Ausformung kann etwa eine verbesserte oder vereinfachte Abdichtung gegenüber Leckströmen der Ladeluft, zum Beispiel zwischen dem Sammler und einer Gehäusewand, erfolgen. Insbesondere bevorzugt kann der Überstand mit einem Dichtglied versehen sein und/oder ein Widerlager für ein Dichtglied bilden.

Je nach Anforderungen kann das Gehäuse aus einem Kunststoff oder aus einem Leichtmetall, zum Beispiel auf Aluminiumbasis, bestehen.

Bevorzugt ist an dem Austritt des Gehäuses ein Motorflansch zur Befestigung an einem Einlassbereich eines Zylinderkopfes vorgesehen, wobei der Motorflansch je nach Anforderungen bevorzugt aus Kunststoff oder aus einem Leichtmetall bestehen kann. Zur Optimierung der Kosten kann es zum Beispiel vorgesehen sein, dass der Motorflansch aus Leichtmetall besteht, während das Gehäuse des Saugrohrs aus einem Kunststoff besteht. In diesem Fall sind Motorflansch und Gehäuse als separate Teile aneinander festgelegt, zum Beispiel mittels Verschraubung. Bestehen Motorflansch und Gehäuse aus dem gleichen Material, etwa Kunststoff oder Aluminium, so können sie materialeinheitlich einstückig ausgebildet sein. Eine materialeinheitlich einstückig Ausbildung umfasst auch den Fall, dass aus bautechnischen Gründen das Gehäuse und der Motorflansch aus Kunststoff vorgefertigt und dann als separate Teile miteinander verschweißt werden, zum Beispiel mittels Ultraschallschweißen. Alternativ hierzu kann der Motorflansch, sofern die Formgebung es gießtechnisch ermöglicht, bei einem einzigen Gussvorgang mit dem Gehäuse ausgeformt werden.

Bei einer weiteren bevorzugten Ausführungsform ist ein Kühlfluid-Anschluss des Ladeluftkühlers im Bereich der Durchführungen elastisch luftdicht gegenüber dem Gehäuse abgedichtet. Die elastische Abdichtung verringert die Übertragung von Verspannungen und Vibrationen von dem Gehäuse auf den Ladeluftkühler.

Allgemein vorteilhaft ist es vorgesehen, dass zumindest ein Kühlfluid-Anschluss des Ladeluftkühlers stoffschlüssig mit dem Ladeluftkühler verbunden ist, in bevorzugter Detailgestaltung mittels Verlötung, und/oder dass zumindest ein Kühlfluid-Anschluss des Ladeluftkühlers formschlüssig mit dem Ladeluftkühler verbunden ist, in bevorzugter Detailgestaltung mittels Verschraubung und/oder Verclipsung.

Bei einer besonders bevorzugten Ausführungsform ist zumindest ein Kühlfluid-Anschluss des Ladeluftkühlers an einer bezüglich der Schwerkraft oberen Seite des Ladeluftkühlers vorgesehen. Hierdurch kann auf zusätzliche Entlüftungsöffnungen verzichtet werden, da eine Entlüftung des Ladeluftkühlers automatisch über seine Kühlfluid-Anschlüsse erfolgt.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt. eine explodierte räumliche Ansicht eines erfindungsgemäßen Saugrohrs mit integriertem Ladeluftkühler.
- Fig. 2: zeigt eine explodierte räumliche Ansicht des Ladeluftkühlers aus Fig. 1.
- Fig. 3: zeigt eine teilweise aufgeschnittene und auf dem Kopf stehende räumliche Ansicht des Saugrohres aus Fig. 1.
- Fig. 4: zeigt eine teilweise Schnittansicht des Ladeluftkühlers aus Fig. 1.
- Fig. 5: zeigt eine erste Variante eines Gehäuseteils des Saugrohrs aus Fig. 1 mit angrenzendem Motorflansch.
- Fig. 6: zeigt eine zweite Variante des Gehäuseteils aus Fig. 5 mit angrenzendem Motorflansch.
- Fig. 7: zeigt eine räumliche Darstellung einer Abwandlung des Saugrohrs aus Fig. 1 mit eingesetzten Lagergliedern.
- Fig. 8: zeigt eine räumliche Ansicht des Ladeluftkühlers aus Fig. 3.
- Fig. 9: zeigt eine Ausschnittsvergrößerung des Ladeluftkühlers aus Fig. 4 im Bereich eines Sammlers.

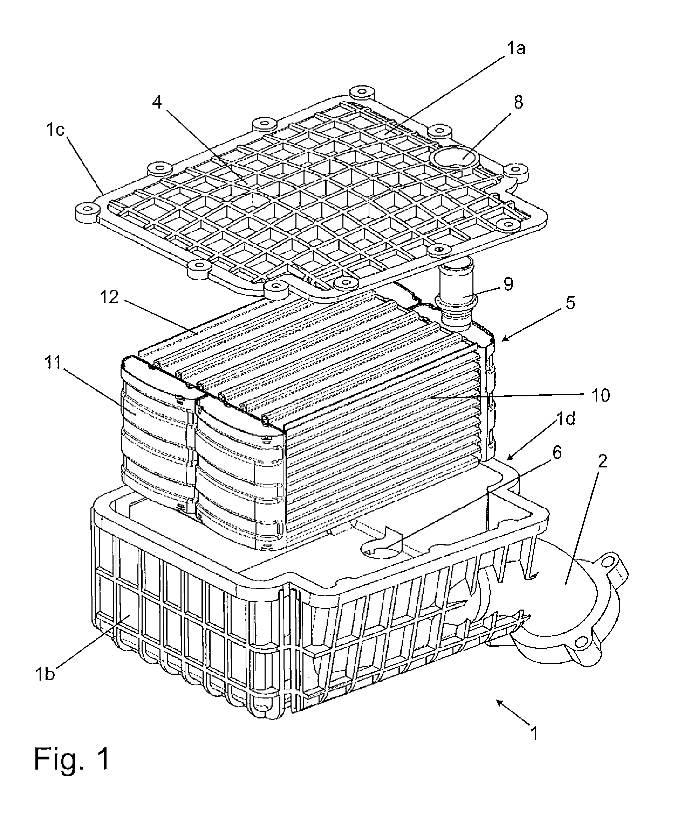

Das in Fig. 1 gezeigte erfindungsgemäße Saugrohr umfasst ein äußeres Gehäuse 1 aus Kunststoff, das ein unteres Gehäuseteil 1a und ein oberes Gehäuseteil 1b umfasst. Das untere Gehäuseteil 1a umschließt den größten Teil des Volumens des Gehäuseinneren und hat einen Zutritt 2 in Form eines rohrförmigen Flansches zum Anschluss einer Ladeluftleitung sowie einen Austritt 3 in Form einer rechteckigen Öffnung, die sich über den größten Teil einer Seitenwand erstreckt.

Der zweite, obere Gehäuseteil 1b ist im Wesentlichen in Form eines flachen Deckels mit zur Verstärkung vorgesehenen Stegstrukturen 4 ausgebildet. Verstärkende Stegstrukturen 4 finden sich auch über sämtliche Seitenwände des unteren Gehäuseteils 1a.

Die Einbaulage des Gehäuses 1 gegenüber einem nicht dargestellten Verbrennungsmotor entspricht im Wesentlichen der Lage in Fig. 1. Die Trennebene zwischen den Gehäuseteilen 1 a, 1 b verläuft im Wesentlichen in der Wagerechten. Ein in das Gehäuse eingesetzter Ladeluftkühler 5 hat im Wesentlichen die Form eines Quaders, welcher von dem zwischen den Gehäuseteilen 1a, 1b vorhandenen Innenraum des Gehäuses 1 im Wesentlichen umfangen wird. Die größte Seitenfläche des Quaders verläuft in der Wagerechten und parallel zu der Trennebene zwischen den Gehäuseteilen 1 a, 1 b. Wie Fig. 1 zeigt, ist der Ladeluftkühler 5 senkrecht zu der größten Seitenfläche des Quaders in das untere Gehäuseteil 1 a einsetzbar. Die Orientierung gegenüber der Senkrechten bezieht sich dabei auf die Einbaulage im Kraftfahrzeug. Es versteht sich, dass die Vormontage der Teile vor einem Einbau in das Kraftfahrzeug auch in einer anderen räumlichen Orientierung erfolgen kann. Im Beispiel nach Fig. 1 werden die beiden see 11a, 1b entlang eines mit Bohrungen versehenen Randes 1c dichtend miteinander verschraubt. Alternativ können die Teile auch dauerhaft miteinander verschweißt oder verklebt werden.

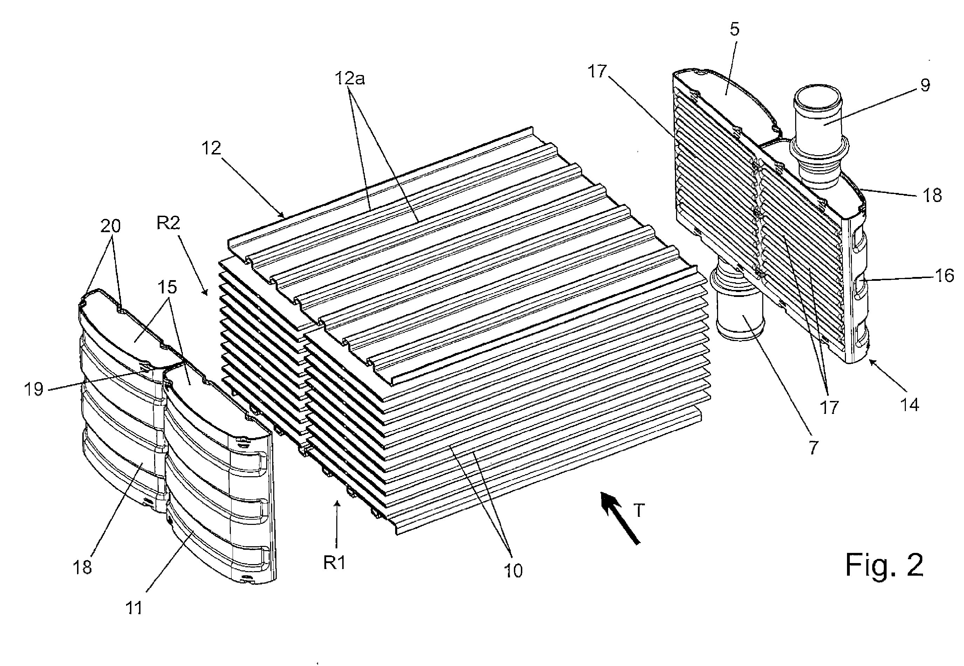

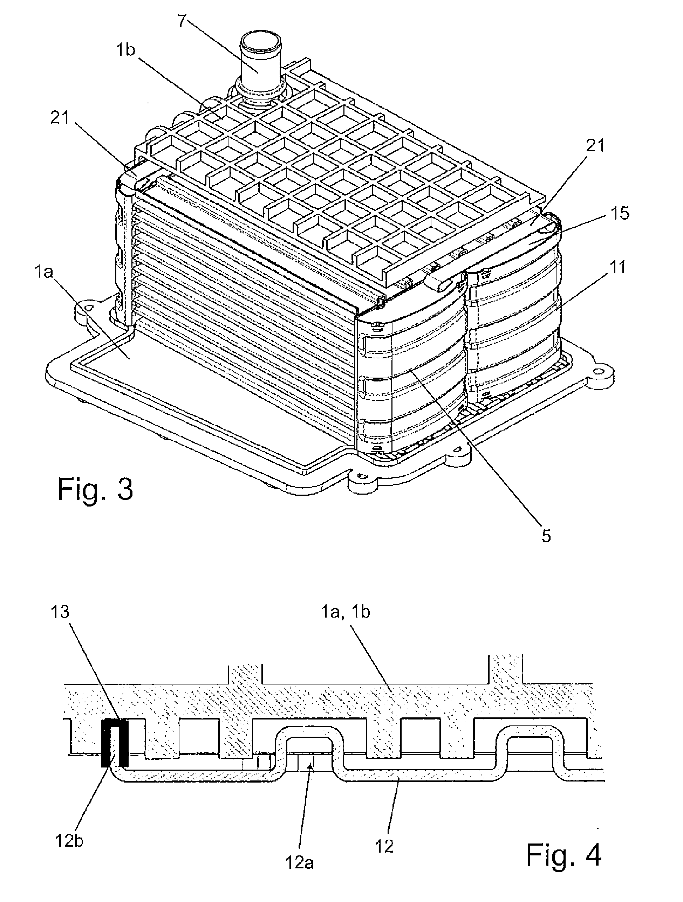

Um einen seitlichen Leckstrom der Ladeluft zu vermeiden, sind als Sammler 11, 14 ausgebildete Seiten des Ladeluftkühlers in Ausbuchtungen 1d des Gehäuseteils 1a eingebettet, die bezüglich des Gehäuses im Bereichs des Eintritts 2 eine Hinterschneidung bilden. Zwischen den Sammlern 11, 14 und den seitlichen Wänden des Gehäuseteils 1a bzw. Ausbuchtungen 1d können zudem weitere, in Fig. 1 und Fig. 2 nicht dargestellte Dichtmittel vorgesehen sein, siehe zum Beispiel die Abwandlung nach Fig. 3 bis Fig. 5.

In einer Bodenseite des unteren Gehäuseteils 1a befindet sich eine erste Durchführung 6 zur Aufnahme eines zuleitenden Anschlussstutzens 7 (siehe Fig. 2) für ein Kühlfluid des Ladeluftkühlers 5. In dem deckelartigen oberen Gehäuseteil 1b befindet sich eine zweite Durchführung 8 für einen abführenden Anschlussstutzen 9 des Ladeluftkühlers 5. Der Anschlussstutzen 9 befindet sich an einer Oberseite des Ladeluftkühlers 5, so dass an dem Ladeluftkühler 5 keine weiteren Entlüftungsbohrungen vorgesehen sind. Die Entlüftung des Ladeluftkühlers 5 bezüglich des durchströmenden Kühlfluids erfolgt problemlos im eingebauten Zustand und im Betrieb über den oberen Kühlfluid-Anschluss 9.

Der Ladeluftkühler 5 ist vollständig als verlöteter Block aus Aluminiumteilen ausgebildet. Auf bekannte Weise sind zumindest einige der Bauteile ein- oder zweiseitig lotplattiert und werden nach einer mechanischen Vormontage bzw. Kassetierung in einem Lötofen verlötet.

Gemäß der explodierten Darstellung nach Fig. 2 umfasst der Ladeluftkühler 4 einen Stapel aus vorliegend zwei Reihen von separaten Flachrohren 10, die in einer Tiefenrichtung T beziehungsweise einer Richtung der Ladeluftströmung hintereinander angeordnet sind. Vorliegend verlaufen die Flachrohre in der waagerechten Ebene. Die beiden Reihen R1, R2 von Flachrohren werden von dem Kühlfluid, zum Beispiel Motor-Kühlmittel eines Niedertemperatur-Kühlkreislaufs, in entgegen gesetzter Richtung durchströmt. Wie Fig. 2 zeigt, durchströmt das Kühlmittel, das durch den unteren Kühlfluid-Anschluss 7 eintritt, zunächst die in Luftströmungsrichtung hintere Reihe R2, wird dann in einen Sammler 11 um 180° umgelenkt und durchströmt die vordere Reihe R1 von Flachrohren 10 in zu der hinteren Reihe R2 entgegen gesetzten Richtung. Die Durchströmung der Reichen R1, R2 bezüglich der der Luftströmung erfolgt zunächst durch R1 und dann durch R2, also im Gegenstrom-Verfahren.

Zwischen den gestapelten Flachrohren 10 sind jeweils nicht dargestellte Lagen von Rippen vorgesehen, wobei die Rippen über beide Reihen R1, R2 durchgängig ausgebildet sind. Endseitig des Stapels von Flachrohren 10 sind jeweils Seitenteile 12 angeordnet, die mehrere sickenartige Stege 12a aufweisen, so dass die Seitenteile 12 auf einfache Weise aus einem Blech geformt werden können. Die Stege 12a bilden mit korrespondierenden stegartigen Ausformungen der gegenüberliegenden Seitenflächen der Gehäuseteile 1a, 1b eine Labyrinthdichtung, siehe insbesondere Detaildarstellung nach Fig. 4. Durch die mehrfachen Überlappungen ist eine gute Abdichtung des Ladeluftstroms gegenüber Leckströmen zwischen Ladeluftkühler 5 und Gehäuseteil 1 a, 1 b mit einfachen Mitteln erreicht und ein Leckstrom entlang der oberen und unteren Seitenflächen wird vermieden. Je nach Anforderung kann ergänzend auch noch eine Elastomerdichtung 13 vorgesehen sein, die in der Darstellung nach Fig. 4 als längliches Profil auf eine endständige aufgebogene Kante 12b des Seitenteils 12 aufgesetzt ist.

Der endseitige, umlenkende Sammler 11 sowie ein eintrittsseitiger Sammler 14 sind in gleicher Bauart aus einem Blechformteil 16 sowie jeweils vier seitlichen Deckelteilen 15 ausgeformt. Das Blechformteil 16 wird in einem mittleren Abschnitt bzw. Bodenteil mit zwei Reihen von Durchzügen 17 zur Aufnahme der Enden der Flachrohren 10 versehen, wonach seitliche Überstände zur Bildung einer zweigeteilten äußeren Sammlerwand 18 umgelegt werden. Die Enden des Blechformteils treffen sich in einem Trennbereich 19 zwischen den beiden Teilen der Sammlerwand 18. Im Fall des umlenkenden Sammlers 11 sind in dieser Trennwand 19 nicht dargestellte Durchbrechungen zur Durchströmung mit dem Kühlmittel vorgesehen. Im Fall des eingangsseitigen Sammlers 14 ist die Trennwand 19 ohne Durchbrechungen ausgebildet, so dass eine Hälfte des Sammlers 14 der Zuführung und die andere Hälfte des Sammlers 14 der Abführung des Fluids dient. Insgesamt ist der Ladeluftkühler daher als U-flow-Kühler bezüglich des Kühlfluidstroms ausgeformt.

Die Sammler 11, 14 werden jeweils durch 4 Deckelteile 15, die in Laschen 20 am Rand des Blechteils 16 mechanisch zur Kassettierung gehalten sind, vervollständigt. Bei einer nicht gezeigten Variante können je Sammler 11, 14 auch nur zwei Deckelteile vorgesehen sein. Am eintrittsseitigen Sammler 14 ist an einem der unteren Deckelteile 15 ein profilierter Stutzen 7 in eine Durchbrechung eingesetzt und an einem oberen Deckelteil 15 ist ein ebenso profilierter Stutzen 9 angesetzt. Die Stutzen 7, 9 bilden Kühlfluid-Anschlüsse, wobei der untere Stutzen 7 der Zuführung und der obere Stutzen 9 der Abführung des Kühlfluids dient.

Bei einer nicht dargestellten alternativen Ausführungsform können die Stutzen 7, 9 auch nach dem Lötvorgang als separate Teile, zum Beispiel Kunststoffteile, mittels Verschraubung, Verclipsung, Verklebung oder anderen Maßnahmen eingesetzt werden.

Bei einer bevorzugten Detailgestaltung des Ausführungsbeispiels gemäß Fig. 3 ist der Ladeluftkühler 5 gegen das untere Gehäuseteil 1a mittels eines Federglieds in Form von zwei Federblechen 21 elastisch abgestützt. Die Federbleche 21 sind in Form von Blechstreifen mit umgebogenen Enden ausgebildet, wobei die umgebogenen Enden jeweils an einem der Deckelteile 15 der Sammler 11, 14 anliegen. Durch das Federglied 21 ist eine leichte elastische Bewegbarkeit des Ladeluftkühlers 5 gegenüber dem Gehäuse 1 gegeben, so dass Vibrationen des Gehäuses 1 gegenüber dem Ladeluftkühler 5 gedämpft werden und thermische Ausdehnungen von Gehäuse 1 und Ladeluftkühler 5 kompensiert werden. Zweckmäßig sind hierzu an den Kühlfluid-Anschlüssen 7, 9 ausreichend elastische Dichtmittel (nicht dargestellt) gegenüber den Durchführungen 6, 8 in den Gehäuseteilen 1a, 1b vorgesehen.

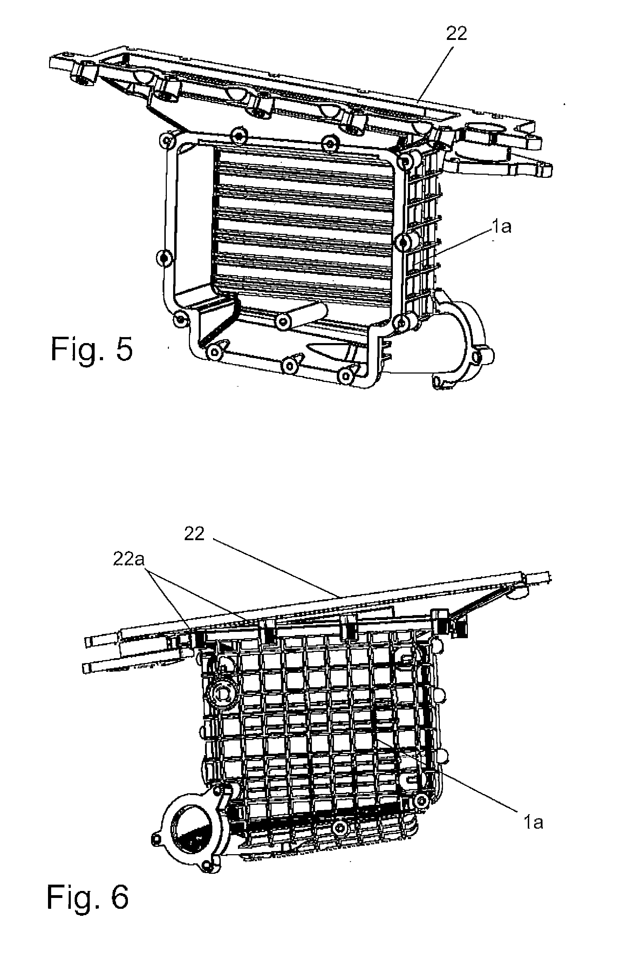

Fig. 5 und Fig. 6 zeigen zwei Ausführungsformen, bei denen jeweils ein Motorflansch 22 zur Verschraubung des Saugrohrs nach Fig. 1 mit dem Zylinderkopf eines Verbrennungsmotors an den unteren Gehäuseteil 1a an seiner austrittsseitigen Öffnung 3 vorgesehen ist.

Im Beispiel nach Fig. 5 ist der Motorflansch 22 ebenso wie das Gehäuseteil 1a aus Kunststoff ausgebildet, wobei der Motorflansch 22 und das Gehäuseteil 1 a miteinander reibverschweißt sind. Sie bilden daher ein materialeinheitlich einstückiges Bauteil aus Kunststoff.

Im Beispiel nach Fig. 6 besteht der Motorflansch 22 aus Aluminium, wobei er über Verschraubungen 22a mit dem wie in Fig. 5 aus Kunststoff bestehenden Gehäuseteil 1a verschraubt ist. Bei einer nicht gezeigten Variante können auch sowohl der Motorflansch 22 als auch das Gehäuse 1 aus einem Leichtmetall wie etwa Aluminium bestehen. Die Fertigung aus Aluminium ist bei besonders hohen Ladedrücken oder auch bei lokal hohen Temperaturen, zum Beispiel in Verbindung mit einer Hochdruck-Abgasrückführung, gewünscht. Insofern Drücke und Temperaturen die Ausformung aus Kunststoff erlauben, ist diese aus Gewichts- und Kostengründen häufig, aber nicht notwendig, gewünscht. Je nach Anforderung können auch die Gehäuseteile 1 a, 1b aus verschiedenem Material, etwa Aluminium und Kunststoff, bestehen.

Ganz allgemein ist unter Ladeluft im Sinne der Erfindung das dem Verbrennungsmotor zugeführte Gas zu verstehen und beinhaltet in diesem Sinne auch beliebige Mischungen von Luft und Abgas, sofern eine Abgasrückführung vorgesehen ist. Das erfindungsgemäße Saugrohr kann sowohl mit Dieselmotoren als auch mit Benzinmotoren kombiniert werden.

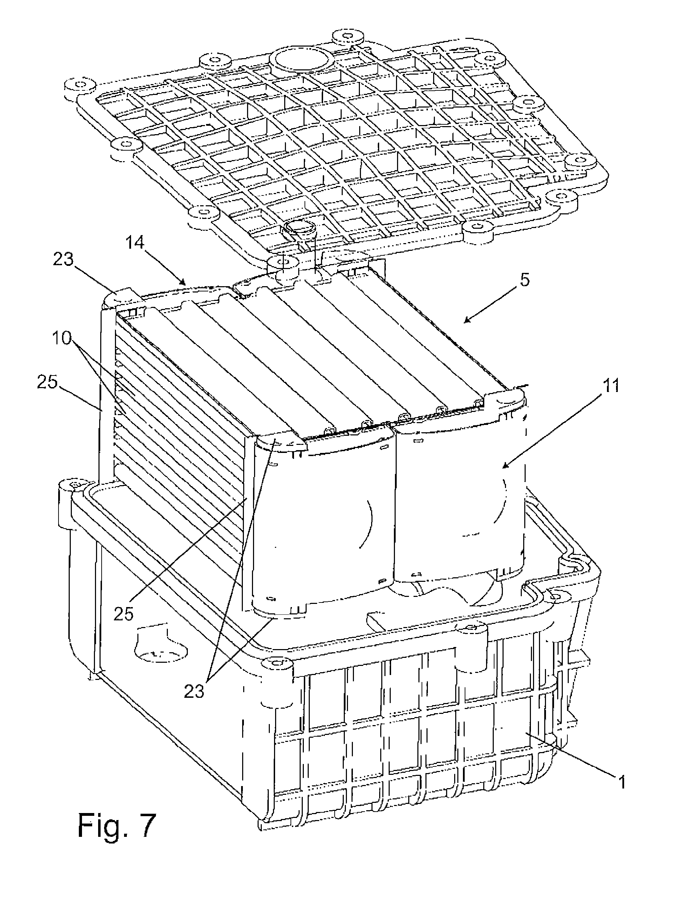

Bei dem in Fig. 7 bis Fig. 9 gezeigten weiteren Ausführungsbeispiel ist der Ladeluftkühler 5 mittels elastischer Lagerglieder 23 gegenüber dem Gehäuse 1 abgestützt. Die insgesamt acht Lagerglieder sind als Prismenblöcke aus einem elastischen Material wie etwa Gummi ausgeformt und haben auf ihren Oberseiten jeweils Bohrungen bzw. Vertiefungen 23a, mittels derer sie gegenüber dem Gehäuse 1 besser fixiert sind.

Die Lagerglieder 23 haben den Querschnitt eines rechtwinkligen Dreiecks mit einer gebogenen Hypotenuse. Sie liegen jeweils auf den seitlichen Deckelteilen 15 der Sammler auf und werden mittels einer biegbaren Lasche 24 klemmend fixiert, die in einem überstehenden Rand des Blechformteils 16 vorgesehen ist.

Jeweils zwei der Lagerglieder 23, die an einander gegenüberliegenden Seitenteilen 15 eines Sammlers angeordnet sind, bilden zusammen mit einem Verbindungsglied 25 eine bauliche Einheit bzw. sind über das Verbindungsglied 25 miteinander verbunden.

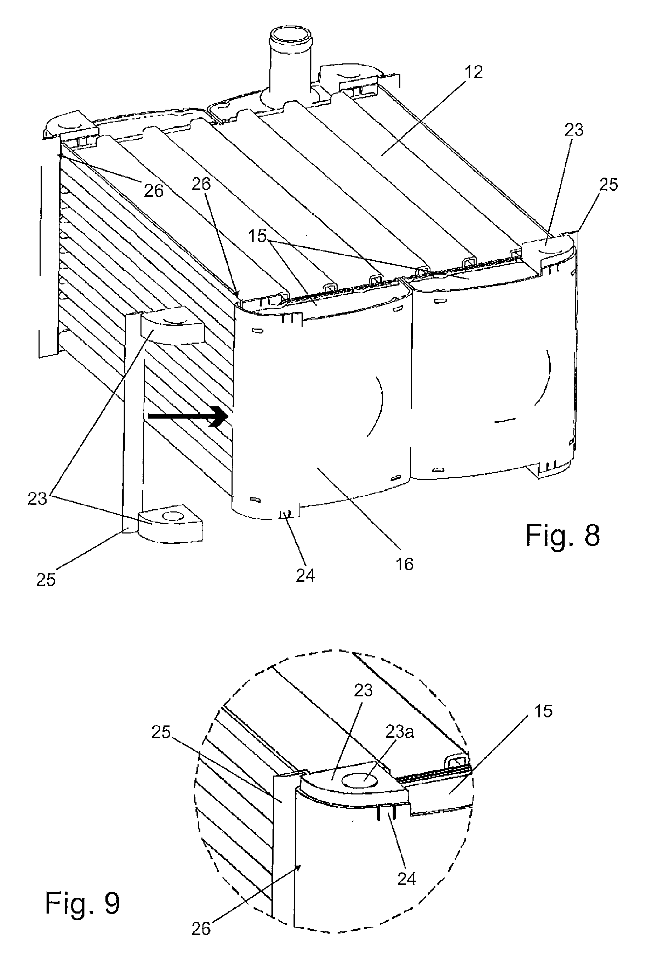

Das Verbindungsglied 25 umfasst ein längliche Dichtlippe ausgeformtes Dichtglied, das an einem Rand des Sammlers verläuft und eine Abdichtung zwischen Gehäuse 1 und Ladeluftkühler 5 herstellt, mittels derer Leckströme der Ladeluft vermieden werden. In Fig. 8 ist eine der Einheiten aus Lagergliedern 23 und Verbindungsglied 25 im Zuge einer Montage (Pfeilrichtung) dargestellt. Die Einheit als materialeinheitlich einstückiges Formteil hergestellt sein oder auch aus mehreren zusammengesetzten Bauteilen bestehen.

Ein weiterer Unterschied zum ersten Ausführungsbeispiel nach Fig. 1 liegt in der Formgebung der Sammler 11, 14. Diese weisen in der Strömungsrichtung der Ladeluft jeweils einen Überstand 26 auf, um den sie über eine aus den Vorderkanten der Flachrohre 10 gebildete Eintrittsebene sowie eine aus den Hinterkanten der Flachrohre 10 gebildete Austrittsebene des Kühlernetzes aus Flachrohren und Rippen hinausragen.

Vorliegend dient dieser Überstand 26 als Widerlager zur Anlage des als Dichtlippe ausgeformten Verbindungsglieds 25. Bei alternativen Ausführungsformen kann auch ein separates Dichtglied an dem Überstand 26 angeordnet sein und/oder oder der Überstand bildet mit einer geeigneten, den Überstand umgreifenden Ausformung des Gehäuses eine Labyrinthdichtung.

Es versteht sich, dass die einzelnen Merkmale verschiedener Ausführungsbeispiele je nach Anforderungen sinnvoll miteinander kombiniert werden können.

## Patentansprüche

1. Saugrohr mit integriertem Ladeluftkühler, umfassend
ein Gehäuse (1) mit einem ersten Gehäuseteil (1a) und einem damit verbundenen zweiten Gehäuseteil (1b), wobei Ladeluft über einen Zutritt (2) in das Gehäuse (1) einströmt und über einen Austritt (3) aus dem Gehäuse (1) ausströmt,
wobei der Ladeluftkühler (5) in dem Gehäuse (1) angeordnet ist und von der Ladeluft auf dem Weg von dem Zutritt (2) zu dem Austritt (3) durchströmt wird,
**dadurch gekennzeichnet,**
**dass** der Ladeluftkühler (5) bis auf Durchführungen (6, 8) zur Durchleitung eines Kühlfluids vollständig von dem Gehäuse (1) umfangen ist und der Ladeluftkühler (5) elastisch gegenüber dem Gehäuse abgestützt ist, wobei die Abstützung mittels zumindest eines elastischen Lagerglieds (23) erfolgt, das insbesondere an einem Sammler (11, 14) des Ladeluftkühlers (5) angeordnet ist und der jeweilige Kühlfluid-Anschluss (7, 9) des Ladeluftkühlers (5) durch eine Durchführung greift und im Bereich der Durchführungen (6, 8) elastisch luftdicht gegenüber dem Gehäuse abgedichtet ist.

2. Saugrohr nach Anspruch 1, **dadurch gekennzeichnet, dass** der Ladeluftkühler (5) im Wesentlichen die Form eines Quaders hat, wobei der Ladeluftkühler (5) senkrecht zu der größten Seitenfläche des Quaders in eines der Gehäuseteile (1a) einsetzbar ist.

3. Saugrohr nach Anspruch 1 oder 2, **dadurch gekennzeichnet, dass** der Ladeluftkühler (5) als Rohrbündelkühler mit einem Stapel von Flachrohren (10) ausgebildet ist, wobei die Flachrohre (10) von dem Kühlfluid durchströmt und von der Ladeluft umströmt sind.

4. Saugrohr nach Anspruch 3, **dadurch gekennzeichnet, dass** endseitig der Flachrohre (10) jeweils ein Sammler (11, 14) angeordnet ist, wobei die Flachrohre (10) und die Sammler (11, 14) als verlöteter Block aus Metall, insbesondere Aluminium, hergestellt sind.

5. Saugrohr nach Anspruch 4, **dadurch gekennzeichnet, dass** zumindest einer der Sammler (11, 14) einen Bodenbereich (17) und eine Sammlerwand (18) aufweist, die zusammen aus einem Blechformteil (16) einstückig ausgebildet sind.

6. Saugrohr nach einem der Ansprüche 3 bis 5, **dadurch gekennzeichnet, dass** das Rohrbündel (10) wenigstens zwei Rohrreihen (R1, R2) in einer Tiefenrichtung (T) umfasst, wobei die Rohrreihen (R1, R2) entweder aus jeweils separaten Flachrohren (10) oder aus einem einstückigen Flachrohr mit getrennten Strömungskanälen ausgebildet sind.

7. Saugrohr nach Anspruch 6, **dadurch gekennzeichnet, dass** die Rohrreihen (R1, R2) von dem Kühlfluid nacheinander in entgegengesetzter Richtung durchströmt werden, insbesondere in Gegenstromanordnung bezüglich der Strömungsrichtung (T) der Ladeluft.

8. Saugrohr nach einem der vorhergehenden Ansprüche, **dadurch gekennzeichnet, dass** an dem Ladeluftkühler (5) zumindest ein Seitenteil (12) angeordnet ist, wobei das Seitenteil (12) eine Strukturierung (12a) zur Ausbildung einer Labyrinthdichtung gegenüber einer Innenwand des Gehäuses (1) aufweist.

9. Saugrohr nach einem der vorhergehenden Ansprüche, **dadurch gekennzeichnet, dass** zumindest zwei Lagerglieder (23) über ein Verbindungsglied (25) miteinander verbunden sind, wobei das Verbindungsglied (25) insbesondere ein Dichtglied zur Abdichtung des Ladeluftkühlers gegenüber dem Gehäuse aufweist.

10. Saugrohr nach einem der vorhergehenden Ansprüche, **dadurch gekennzeichnet, dass** ein Sammler des Ladeluftkühlers einen in Strömungsrichtung der Ladeluft erstreckten Überstand (26) über eine Eintritts- oder Austrittsebene eines Kühlernetzes (10) aufweist.

11. Saugrohr nach einem der vorhergehenden Ansprüche, **dadurch gekennzeichnet, dass** das Gehäuse (1) aus einem Kunststoff oder aus einem Leichtmetall besteht.

12. Saugrohr nach einem der vorhergehenden Ansprüche, **dadurch gekennzeichnet, dass** an dem Austritt ein Motorflansch (22) zur Befestigung an einem Einlassbereich eines Zylinderkopfes vorgesehen ist, wobei insbesondere der Motorflansch (22) aus Kunststoff oder aus einem Leichtmetall besteht.

13. Saugrohr nach einem der vorhergehenden Ansprüche, **dadurch gekennzeichnet, dass** zumindest ein Kühlfluid-Anschluss (7, 9) des Ladeluftkühlers (5) stoffschlüssig mit dem Ladeluftkühler (5) verbunden ist, insbesondere mittels Verlötung, und/oder dass zumindest ein Kühlfluid-Anschluss (7, 9) des Ladeluftkühlers (5) formschlüssig mit dem Ladeluftkühler (5) verbunden ist, insbesondere mittels Verschraubung und/oder Verclipsung.

14. Saugrohr nach einem der vorhergehenden Ansprüche, **dadurch gekennzeichnet, dass** zumindest ein Kühlfluid-Anschluss (7, 9) des Ladeluftkühlers (5) an einer bezüglich der Schwerkraft oberen Seite des Ladeluftkühlers (5) vorgesehen ist.

## Claims

1. An intake manifold with integrated charge air cooler, comprising, a housing (1) having a first housing part (1a) and a second housing part (1b) connected thereto, wherein charge air flows into the housing (1) via an inlet (2) and flows out of the housing (1) via an outlet (3), wherein the charge air cooler (5) is located in the housing (1) and the charge air flows through the charge air cooler on the way from the inset (2) to the outlet (3) **characterized in that** the charge air cooler (5) is fully enclosed by the housing (1) except for feed-throughs (6, 8) for passage of a coolant, and the charge air cooler (5) is resiliently supporter with respect to the housing, wherein the support is provided by means of at least one resilient support member (23), which in particular is located on a headed (11, 14) of the charge air cooler (5), and the respective coolant connection (7, 9) of the charge air cooler (5) passes through a passage and is sealed in a resiliently airtight manner with respect to the housing in the region of the feed-throughs (6, 8).

2. The intake manifold according to claim 1, **characterized in that** the charge air cooler (5) has basically the shape of a cuboid, wherein the charge air cooler (5) can be inserted into one of the housing parts (1a) perpendicularly to the largest side face of the cuboid.

3. The intake manifold according to claim 1 or 2, **characterized in that** the charge air cooler (5) is designed as a tube heat exchanger with a stack of flat tubes (10), wherein, the coolant flows through the flat tubes (10) and the charge air flows around them.

4. The intake manifold according to claim 3, **characterized in that** one header (11, 14) is located at each end of the flat tubes (10), wherein the flat tubes (10) and the headers (11, 14) are manufactured as a soldered block from metal, in particular aluminium.

5. The intake manifold according to claim 4, **characterized in that** at least one of the headers (11, 14) has a base region (17) and a header wall (18) that are produced together integrally from a: formed sheet metal part (16).

6. The intake manifold according to one of claims 3 to 5, **characterized in that** the tubes bundle (10) includes at least two rows of tubes (R1, R2) in a depth direction (T), wherein the rows of tubes (R1, R2) consist either of separate flat tubes (10) or of a one-piece flat tube with separate flow passages.

7. The intake manifold according to claim 6, **characterized in that** the coolant flows through the rows of tubes (R1, R2) sequentially in opposite directions, in particular in a counterflow configuration with respect to the direction of flow (T) of the charge air.

8. The intake manifold according to one of the preceding claims, **characterized in that** at least one side part (12) is arranged on the charge air cooler (5), wherein the side part (12) has a structuring (12a) for forming a labyrinth seal with respect to an inside wall of the housing (1).

9. The intake manifold according to one of the preceding claims, **characterized in that** at least two support members (23) are connected to one another via a coupling link (25), wherein the coupling link (25) has, in particular a seating member to seal the charge air cooler with respect to the housing.

10. The intake manifold according to one of the preceding claims, **characterized in that** a header of the charge air cooler has an overhang (26) extending in the flow direction of the charge air beyond an inlet plane or outlet plane of a cooler network (10).

11. The intake manifold according to one of the preceding claims, **characterised in that** the housing (1) is made of a plastic or a light metal.

12. The intake manifold according to one of the preceding claims, **characterized in that** an engine flange (22) for attachment to an intake region of a cylinder head is provided at the outlet, wherein the engine flange (22), in particular, is made of plastic or a light metal.

13. The intake manifold according to one of the preceding claims, **characterized in that** at least one coolant connection (7, 9) of the charge air cooler (5) is integrally bonded to the charge air cooler (5), in particular by means of soldering, and/or **in that** at least one coolant connection (7, 9) of the charge air cooler (5) is joined in an interlocking manner with the charge air cooler (5), in particular by means of screwing and/or clipping.

14. The intake manifold according to one of the preceding claims, **characterized in that** at least one coolant connection (7, 9) of the charge air cooler (5) is provided on a side of the charge air cooler (5) that is the top side with respect to gravity.

## Revendications

1. Collecteur d'admission avec refroidisseur intégré d'air de suralimentation, comprenant un carter (1) comportant une première partie de carter (1a) et une seconde partie de carter (1b) assemblée avec ladite première partie de carter, où de l'air de sur alimentation entre dans le carter (1) par une entrée (2) et sort du carter (1) par une sortie (3), où le refroidisseur d'air de suralimentation (5) est disposé dans le carter (1) et est traversé par de l'air de suralimentation, sur le trajet allant de l'entrée (2) jusqu' à la sortie (3), **caractérisé en ce que** le refroidisseur d'air de suralimentation (5) est entouré complètement par le carter (1), y compris les passages (6, 8) servant à l'acheminement d'un fluide de refroidissement, et le refroidisseur d'air de suralimentation (5) est supporté de façon élastique par rapport au carter, où l'appui est réalisé au moyen d'au moins un élément de palier élastique (23) qui est disposé en particulier sur un collecteur (11, 14) du refroidisseur d'air de suralimentation (5), et le raccordement de fluide de refroidissement. respectif (7, 9) du refroidisseur d'air de suralimentation (5) pénètre un passage et, dans la zone des passages (6, 8), est rendu étanche par rapport au carter en étant élastiquement hermétique.

2. Collecteur d'admission selon la revendication 1, **caractérisé en ce que** le refroidisseur d'air de suralimentation (5) a essentiellement la forme d'un parallélépipède, où le refroidisseur d'air de suralimentation (5) peut être introduit dans l'une des parties de carter (1a), perpendiculairement, à la plus grande surface latérale du parallélépipède.

3. Collecteur d'admission selon la revendication 1 ou 2, **caractérisé en ce que** le refroidisseur d'air de suralimentation (5) est configuré comme un refroidisseur à faisceau de tubes comprenant une pile de tubes plats (10), où les tubes plats (10) sont traversés par le fluide de refroidissement et baignés par l'air de suralimentation.

4. Collecteur d'admission selon la revendication 3, **caractérisé en ce qu'**un collecteur (11, 14) est disposé à chaque fois sur le côté d'extrémité des tubes plats (10), où les tubes plats (10) et les collecteurs (11, 14) sont fabriqués comme un bloc brasé en métal, en particulier en Aluminium.

5. Collecteur d'admission selon la revendication 4, **caractérisé en ce qu'**au moins l'un des collecteurs (11, 14) présente une zone de plaques (17) et une paroi de collecteur (18) qui sont conçues pour former ensemble un seul, et même élément à partir d'une pièce de forme en tôle (16).

6. Collecteur d'admission selon l'une quelconque; des revendications 3 à 5, **caractérisé en ce que** le faisceau de tubes (10) comprend, dans une direction de profondeur (T), au moins deux rangées de tubes (R1, R2), où les rangées de tubes (R1, R2) sont configurées soit en se composant de tubes plats (10) à chaque fois séparés, soit en se composant d'un tube plat formant une seule et même pièce et ayant des conduits d'écoulement séparés.

7. Collecteur d'admission selon la revendication 6, **caractérisé en ce que** les rangées de tubes (R1, R2) sont traversées par le fluide de refroidissement successivement dans une direction de sens apposés, en particulier dans un agencement de flux opposés par rapport à la direction d'écoulement (T) de l'air de suralimentation.

8. Collecteur d'admission selon l'une quelconque des revendications précédentes, **caractérise en ce qu'**au moins une partie latérale (12) est disposée sur le refroidisseur d'air de suralimentation (5), où la partie latérale (12) présente une structuration (12a) servant à la configuration d'un joint à labyrinthe par rapport à une paroi intérieure du carter (1).

9. Collecteur d'admission, selon l'une quelconque, des revendications précédentes, **caractérisé en ce qu'**au moins deux éléments de palier (23) sont reliés l'un à l'autre par un élément d'assemblage (25), où l'élément d'assemblage (25) présente en particulier un élément d'étanchéité servant à l'étanchéité du refroidisseur d'air de suralimentation par rapport au carter.

10. Collecteur d'admission selon l'une quelconque des revendications précédentes, **caractérisé en ce qu'**un collecteur du refroidisseur d'air de suralimentation. présente, une partie saillante (26) située au-dessus d'un plan d' entrée ou de sortie d'un réseau de refroidisseurs (10) et s'étendant dans la direction d'écoulement de l'air de suralimentation.

11. Collecteur d'admission selon l'une quelconque des revendications précédentes, **caractérisé en ce que** le carter (1) se compose d'une matière plastique ou d'un métal léger.

12. Collecteur d'admission selon l'une quelconque des revendications précédentes, **caractérisé en ce qu'**il est prévu, au niveau de la sortie, une bride de moteur (22) servant à la fixation, sur une zone d'admission, d'une culasse de cylindre, où en particulier la bridge de moteur (22) se compose de matière plastique ou d'un métal léger.

13. Collecteur d'admission selon l'une quelconque, des revendications précédentes, **caractérisé en ce qu'**au moins un raccordement de fluide de refroidissement (7, 9) du refroidisseur d'air de suralimentation (5) est assemblé avec le refroidisseur d'air de suralimentation (5) par continuité de matière, en particulier par brasage, et/ou **en ce qu'**au moins un raccordement de fluide de refroidissement (7, 9) du refroidisseur d'air de suralimentation (5) est assemblé avec le refroidisseur d'air de suralimentation (5) par complémentarité de forme, en particulier par vissage et/ou par clipsage.

14. Collecteur d'admission selon l'une quelconque des revendications précédentes, **caractérisé en ce qu'**il est prévu au moins un raccordement de fluide de refroidissement (7, 9) du refroidisseur d'air de suralimentation (5) sur un côté supérieur - par rapport à la gravité - du refroidisseur d'air de suralimentation (5).
